# EUROPÄISCHE PATENTSCHRIFT

(11) **EP 3 898 079 B1**
(45) Veröffentlichungstag und Bekanntmachung des Hinweises auf die Patenterteilung: **08.05.2024**
(21) Anmeldenummer: 19772978.3
(22) Anmeldetag: 28.08.2019
(51) Int. Cl.: B24B 39/02, F16C 33/64, C21D 7/08, B23P 15/00, B23C 3/00, B23C 3/34, B24B 19/06, B23P 9/00, B23P 9/02, F16C 19/00

(54) **VERFAHREN ZUR OBERFLÄCHENBEHANDLUNG, WÄLZLAGERBAUTEIL UND VORRICHTUNG**
METHOD FOR SURFACE TREATMENT, ROLLER BEARING COMPONENT AND DEVICE
PROCÉDÉ DE TRAITEMENT DE SURFACE, COMPOSANT DE ROULEMENT ET DISPOSITIF

(30) Priorität: 19.12.2018 DE 102018132771
(43) Veröffentlichungstag der Anmeldung: 27.10.2021
(73) Patentinhaber: Schaeffler Technologies AG & Co. KG, 91074 Herzogenaurach (DE)
(72) Erfinder: BUSCHKA, Martin, 91074 Herzogenaurach (DE); END, Silvio, 90562 Heroldsberg (DE); KUCKUK, André, 91074 Herzogenaurach (DE)
(86) Internationale Anmeldenummer: PCT/DE2019/100776
(87) Internationale Veröffentlichungsnummer: WO 2020/125842

(56) Entgegenhaltungen:
- EP-A1- 1 505 306
- EP-A1- 2 743 032
- US-A- 5 863 239
- SHNEIDER YU G: "REGULARIZATION OF MICROGEOMETRY OF PART SURFACES", SOVIET ENGINEERING RESEARCH, PRA, MELTON MOWBRAY, GB, Bd. 11, Nr. 5, 1. Januar 1991 (1991-01-01) , Seiten 12-16, XP000257479, ISSN: 0144-6622

## Beschreibung

Die Erfindung betrifft ein Verfahren zur Oberflächenbehandlung eines Werkstücks, wobei eine gehärtete Werkstückoberfläche eines Werkstücks gleichzeitig spanabhebend bearbeitet und gewalzt wird, wobei die die Zerspanung und das Walzen umfassende Bearbeitung bei rotierendem Werkstück in ein und derselben Aufspannung erfolgt. Ferner betrifft die Erfindung ein Wälzlagerbauteil mit einer als Laufbahn für Wälzkörper ausgebildeten Oberfläche sowie eine Vorrichtung zur Durchführung des Verfahrens.

Ein Verfahren ist aus der EP 1 620 230 B1 bekannt. Im Rahmen dieses Verfahrens wird eine Oberfläche eines Maschinenelementes zunächst einem Hartdrehvorgang unterzogen, womit ein Rauheitsprofil mit einer Reihe von alternierenden Kämmen und Rillen erzeugt wird. Anschließend wird die Oberfläche einem Kugelkalandriervorgang, das heißt einem Walzvorgang, unterzogen, um die Kämme des Rauheitsprofils zu ebnen. Für das Kugelkalandrieren wird bei dem bekannten Verfahren eine Kugel mit einem Durchmesser zwischen 2 mm und 13 mm verwendet. Auf die Kugel wirkt ein Druckmedium mit einem hydrostatischen Druck im Bereich von 50 bar bis 400 bar. Bei dem mit dem Kugelkalandrierwerkzeug vorgenommenen Walzvorgang wird ein Verhältnis zwischen der Translationsgeschwindigkeit des Walzwerkzeugs, das heißt Kugelkalandrierwerkzeugs, und der Drehgeschwindigkeit des Werkstücks eingestellt. Dieses Verhältnis ist identisch mit dem Verhältnis zwischen der Translationsgeschwindigkeit des Zerspanungswerkzeugs, das heißt Hartdrehschneidwerkzeugs, und der Drehgeschwindigkeit des Werkstücks beim Zerspanungsvorgang.

Ein weiteres Oberflächenbehandlungsverfahren, welches eine spanabhebende Bearbeitung und ein anschließendes Walzen umfasst, ist in der US 7,685,717 B2 offenbart.

Auch dieses Verfahren ist, ebenso wie das Verfahren nach der EP 1 620 230 B1, für die Bearbeitung von Laufbahnen von Wälzlagerbauteilen vorgesehen.

Die EP 1 505 306 A1 beschreibt ein gattungsgemäßes Verfahren zur Herstellung von Laufbahnen an Lagerbauteilen. Dabei wird ein Rohling bearbeitet, gehärtet, geschliffen und anschließend festgewalzt.

Die US 5 863 239 A offenbart eine Vorrichtung zur Oberflächenbearbeitung eines Bauteils, wobei ein Mikro-Finishen und ein Feinwalzen gleichzeitig am Bauteil erfolgen kann.

Die EP 2 743 032 A1 beschreibt ein Verfahren zum spanlosen Bearbeiten eines Oberflächenbereichs eines Wälzlagerrings, wobei zwei Werkzeuge mit je einer Werkzeugspitze zueinander gegenläufig über die zu bearbeitende Oberfläche geführt werden. Der Wälzlagerring wird dabei in Rotation versetzt, so dass von jedem Werkzeug eine schraubenförmige oder spiralförmige Bahnkurve ausgebildet wird. Die Bahnkurven überlappen bereichsweise und kreuzen einander sich im Überlappungsbereich vielfach.

Die Veröffentlichung Regularization of microgeometry of part surfaces , Soviet Engineering research, PRA, Melton Mowbray, GB, Bd. 11, Nr. 5, 01. Januar 1991, Seiten 12 - 16, XP000257479, ISSN: 0144-6622 offenbart Verfahren zum Vibrationsrändeln.

Der Erfindung liegt die Aufgabe zugrunde, gegenüber dem genannten Stand der Technik weiterentwickelte Möglichkeiten der Oberflächenbearbeitung, insbesondere von Wälzlagerkomponenten, anzugeben, welche sich durch ein besonders günstiges Verhältnis zwischen erzielbarer Oberflächenqualität und fertigungstechnischem Aufwand auszeichnet.

Diese Aufgabe wird erfindungsgemäß gelöst durch ein Verfahren zur Oberflächenbehandlung gemäß Anspruch 1. Das Verfahren ist insbesondere zur Herstellung eines Wälzlagerbauteils geeignet. Im Folgenden im Zusammenhang mit dem Wälzlagerbauteil erläuterte Ausgestaltungen und Vorteile der Erfindung gelten sinngemäß auch für das Oberflächenbehandlungsverfahren und umgekehrt.

Das Oberflächenbehandlungsverfahren geht von einer gehärteten metallischen Werkstückoberfläche aus. Insbesondere handelt es sich dabei um eine Oberfläche, welche später als Laufbahn für Wälzkörper, beispielsweise Zylinderrollen oder Kegelrollen, dienen soll. Die Oberfläche wird im Rahmen des Verfahrens spanabhebend bearbeitet und nachfolgend gewalzt, wobei die die Zerspanung und das Walzen umfassende Bearbeitung bei rotierendem Werkstück in ein und derselben Aufspannung erfolgt, wobei die Zerspanung einerseits und das Walzen andererseits mit sich überschneidenden Bearbeitungsspuren durchgeführt wird, indem während der Bearbeitung der in Axialrichtung des Werkstücks gemessene Abstand zwischen dem zur Zerspanung verwendeten Werkzeug und dem zum Walzen verwendeten Werkzeug oszillierend verändert wird, und dass ein Umfang des Werkstücks ein ganzzahliges Vielfaches einer Wellenlänge einer Bearbeitungsspur des zur Zerspanung verwendeten Werkzeugs beträgt.

Im Vergleich mit herkömmlichen Verfahren verursacht das erfindungsgemäße Oberflächenbehandlungsverfahren praktisch keinen zusätzlichen oder sogar einen reduzierten Zeitaufwand, wobei eine signifikant verbesserte Oberflächenqualität erzielbar ist. Durch die Überlagerung verschiedener Relativbewegungen zwischen dem Zerspanungswerkzeug und dem Werkstück einerseits und zwischen dem Walzwerkzeug und dem Werkstück andererseits entstehen zahlreiche Kreuzungspunkte zwischen den verschiedenen Bearbeitungsspuren auf der Werkstückoberfläche. Längere unterbrechungsfrei durchlaufende rillenförmige Strukturen auf der Werkstückoberfläche werden vermieden. Insbesondere existiert bei einem rotationssymmetrischen Werkstück keine einzige Bearbeitungsspur, welche unterbrechungsfrei über den gesamten Umfang des Werkstücks läuft.

Die Oberflächenbehandlung, welche die Zerspanung und das anschließende Walzen umfasst, erfolgt dabei in ein und derselben Aufspannung des Werkstücks bei rotierendem Werkstück. Bei der Zerspanung handelt es sich somit insbesondere um Hartdrehen. Das anschließende Walzen wird auch als Glattwalzen bezeichnet.

Während der Bearbeitung, die das Zerspanen und das Glattwalzen einschließt, wird der in Längsrichtung der Rotationsachse des Werkstücks gemessene Abstand zwischen dem Zerspanungswerkzeug und dem Walzwerkzeug oszillierend variiert. Hierbei existieren mehrere voneinander unterscheidbare Möglichkeiten, eine Vielzahl von Überschneidungspunkten zwischen der Bearbeitungsspur des Zerspanungswerkzeugs und der Bearbeitungsspur des Walzwerkzeugs zu erzeugen:
Gemäß einer ersten Möglichkeit erfolgt der Vorschub des Zerspanungswerkzeugs mit konstanter Geschwindigkeit, wogegen das Walzwerkzeug mit oszillierender Geschwindigkeit vorgeschoben wird.

Gemäß einer zweiten Möglichkeit wird das Walzwerkzeug mit konstanter Geschwindigkeit vorgeschoben, wogegen das Zerspanungswerkzeug mit oszillierender Geschwindigkeit vorgeschoben wird.

Gemäß einer dritten Möglichkeit erfolgt sowohl der Vorschub des Zerspanungswerkzeugs mit oszillierender Geschwindigkeit und der Vorschub des Walzwerkzeugs mitunterschiedlicher oszillierender Geschwindigkeit in Längsrichtung der Rotationsachse des Werkstücks.

Auch in diesem Fall beträgt der Umfang der zu bearbeitenden Oberfläche des Werkstücks ein ganzzahliges Vielfaches der Wellenlänge der Bearbeitungsspur des Zerspanungswerkzeugs. Damit wird auf der einen Seite sichergestellt, dass keine vom Zerspanungswerkzeug unbearbeiteten Oberflächenbereiche auf der Werkstückoberfläche verbleiben. Andererseits wird ein unnötig häufiges Überfahren von Oberflächenbereichen des Werkstücks mit dem Zerspanungswerkzeug vermieden.

Gemäß einer vierten Möglichkeit wird bei der Bearbeitung eine Vorschubrichtung des Walzwerkzeugs oszillierend umgekehrt, während eine Vorschubrichtung des Zerspanungswerkzeugs beibehalten wird.

Gemäß einer fünften Möglichkeit wird bei der Bearbeitung eine Vorschubrichtung des Zerspanungswerkzeugs oszillierend umgekehrt, während eine Vorschubrichtung des Walzwerkzeugs beibehalten wird.

Gemäß einer sechsten Möglichkeit wird bei der Bearbeitung eine Vorschubrichtung des Zerspanungswerkzeugs oszillierend umgekehrt und eine Vorschubrichtung des Walzwerkzeugs oszillierend umgekehrt.

Bei der vierten bis sechsten Möglichkeit können dabei besonders viele Überschneidungspunkte oder Kreuzungspunkte zwischen der Bearbeitungsspur des Zerspanungswerkzeugs und der Bearbeitungsspur des Walzwerkzeugs erzeugt werden.

Dabei ist es möglich, die Oszillation der Vorschubgeschwindigkeit des Zerspanungswerkzeugs und/oder des Walzwerkzeugs gemäß der ersten bis dritten Möglichkeit mit der Oszillation der Vorschubrichtung des Zerspanungswerkzeugs und/oder des Walzwerkzeugs gemäß der vierten bis sechsten Möglichkeit beliebig zu kombinieren.

Was die Erzeugung der Oszillationen der zum Zerspanen und zum Walzen verwendeten Werkzeuge betrifft, sind verschiedene Gestaltungen einer dazu verwendeten Vorrichtung grundsätzlich voneinander unterscheidbar:
So ist eine Vorrichtung umfassend ein Zerspanungswerkzeug und ein Walzwerkzeug zur Durchführung des erfindungsgemäßen Verfahrens geeignet, bei der das Zerspanungswerkzeug und/oder das Walzwerkzeug mit einer oszillierenden Vorschubgeschwindigkeit bewegt werden können. Dabei ist eine unabhängige Einstellung und Variation der Vorschubgeschwindigkeit des Zerspanungswerkzeugs und/oder des Walzwerkzeugs erforderlich.

Dabei sind beide Werkzeuge, das heißt das zur Zerspanung verwendete Werkzeug einerseits und das Walzwerkzeug andererseits, unabhängig in der Maschine, welche das erfindungsgemäße Verfahren durchführt, eingespannt, so dass die notwendige Oszillation der Vorschubgeschwindigkeit aus den Maschinenachsen dieser Maschine heraus erfolgen kann.

Die Aufgabe wird weiterhin durch eine Vorrichtung zur Durchführung des erfindungsgemäßen Verfahrens gelöst, umfassend ein Zerspanungswerkzeug in Form eines Drehwerkzeugs und ein Walzwerkzeug, wobei das Zerspanungswerkzeug und/oder das Walzwerkzeug einen Schlitten umfasst, der eine oszillierende Umkehrung der Vorschubrichtung des Zerspanungswerkzeugs und/oder des Walzwerkzeugs ermöglicht.

Dabei ist die Vorrichtung, in der das Zerspanwerkzeug sowie das Walzwerkzeug befestigt sind, mit mindestens einer Oszillationseinheit für das Zerspanwerkzeug und/oder das Walzwerkzeug ausgerüstet, welche den/die Schlitten antreibt / antreiben.

Besonders bevorzugt ist eine Vorrichtung, bei der sowohl eine unabhängige Einstellung und Variation der Vorschubgeschwindigkeit des Zerspanungswerkzeugs und/oder des Walzwerkzeugs möglich ist und weiterhin das Zerspanungswerkzeug und/oder das Walzwerkzeug einen Schlitten umfasst, der eine oszillierende Umkehrung der Vorschubrichtung des Zerspanungswerkzeugs und/oder des Walzwerkzeugs ermöglicht.

Das Walzwerkzeug weist unabhängig davon, in welcher Weise es in die zur Oberflächenbehandlung vorgesehene Maschine eingebunden ist, beispielsweise eine Kugel als Walzelement auf. Prinzipiell sind auch rotationssymmetrische Körper anderer Form, beispielsweise Zylinderrollen oder Tonnenrollen, als Walzelement verwendbar.

Nachfolgend werden mehrere Ausführungsbeispiele der Erfindung anhand der Zeichnungen beispielhaft erläutert. Hierin zeigen:
- Fig. 1: in schematischer Darstellung ausschnittsweise eine erste Vorrichtung zur Oberflächenbehandlung eines Werkstücks,
- Fig. 2: in schematischer Darstellung ausschnittsweise eine weitere Vorrichtung zur Oberflächenbehandlung eines Werkstücks,
- Fig. 3 bis 5: verschiedene Varianten von Bearbeitungsspuren, welche mit der Vorrichtung nach Fig. 2 erzeugbar sind.

Eine insgesamt mit dem Bezugszeichen 11 gekennzeichnete erste Vorrichtung umfasst ein Zerspanungswerkzeug 3 in Form eines Drehwerkzeugs sowie ein Walzwerkzeug 12. Die Werkzeuge 3, 12 sind zur gleichzeitigen Bearbeitung eines Werkstücks 1 (lediglich teilweise und im Schnitt dargestellt), nämlich eines Lagerrings eines Wälzlagers, vorgesehen. Dabei wird eine Werkstückoberfläche 2 erzeugt, welche innerhalb des herzustellenden Wälzlagers als Wälzkörperlaufbahn fungieren soll.

Ausgangspunkt des mit der Vorrichtung 11 durchführbaren Verfahrens ist eine bereits gehärtete Werkstückoberfläche 10. Durch das Hartdrehen mittels des Drehwerkzeugs entsteht hieraus eine Oberfläche 9, welche eine typische, durch das Drehen erzeugte Struktur aufweist. Der Vorgang des Drehens erfolgt mit einer translatorischen Geschwindigkeit Vₐₓ₃ und einer tangentialen Geschwindigkeit Vₜₐₙ. Die Richtung der translatorischen Geschwindigkeit Vₐₓ₃ entspricht der Ausrichtung der Rotationsachse des Werkstücks 1, das heißt dessen Axialrichtung.

Das Walzwerkzeug 12 ist in Längsrichtung der Rotationsachse des Werkstücks 1 versetzt zum Zerspanungswerkzeug 3 angeordnet und umfasst eine Kugel als Walzelement 4. Die Kugel wird in an sich bekannter Weise durch den Druck eines Hydraulikmediums beaufschlagt. Das Walzwerkzeug 12 einschließlich der Kugel wird bei der Bearbeitung des Werkstücks 1 relativ zu diesem mit einer translatorischen Geschwindigkeit Vₐₓ₁₂ vorgeschoben, welche auf diverse Weise, wie nachstehend noch näher erläutert wird, relativ zur translatorischen Geschwindigkeit Vₐₓ₃ variiert werden kann. Dagegen stimmt die mit Vₜₐₙ bezeichnete tangentiale Geschwindigkeit des Walzwerkzeugs 12 relativ zum Werkstück 1 mit der tangentialen Geschwindigkeit Vₜₐₙ des Zerspanungswerkzeugs 3 überein. Dies gilt in Fällen, in welchen die zu bearbeitende Oberfläche des Werkstücks 1, wie im Ausführungsbeispiel skizziert, zylindrisch ist. Im Fall einer kegeligen oder sphärisch gekrümmten Oberfläche des Werkstücks 1 weichen die tangentialen Geschwindigkeiten voneinander ab, ohne den Bearbeitungsvorgang grundsätzlich zu verändern. Durch das Walzwerkzeug 12 wird in jedem Fall die fertig behandelte Oberfläche 2 erzeugt.

Dabei sind beide Werkzeuge 3, 12, das heißt das zur Zerspanungswerkzeug 3 einerseits und das Walzwerkzeug 12 andererseits, unabhängig in der ersten Vorrichtung 11, welche das erfindungsgemäße Verfahren durchführt, eingespannt, so dass die notwendige Oszillation der Vorschubgeschwindigkeit aus den Maschinenachsen heraus erfolgt. So kann hier die Vorschubgeschwidigkeit Vₐₓ₃ des Zerspanungswerkzeugs 3 und/oder die Vorschubgeschwindigkeit Vₐₓ₁₂ des Walzwerkzeugs 12 oszillierend verändert werden, um die Ausbildung der Kreuzungspunkte im Bereich der sich ausbildenden Bearbeitungsspuren bei Drehen und Walzen gezielt zu beeinflussen.

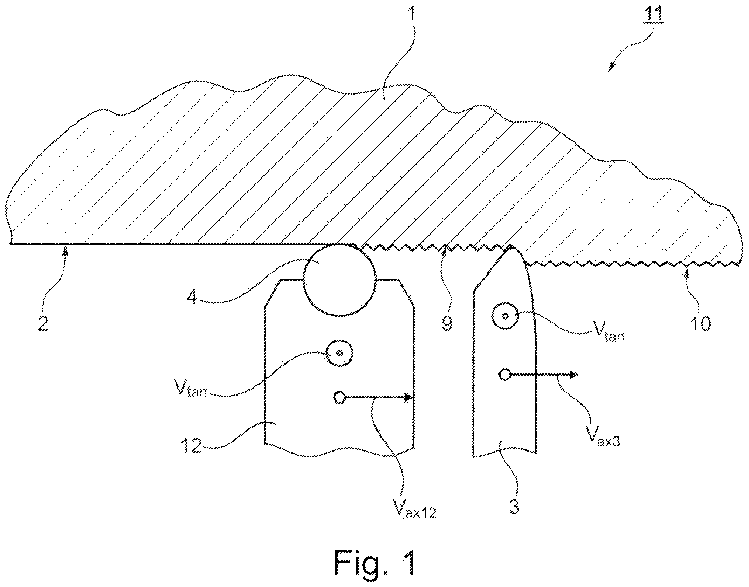

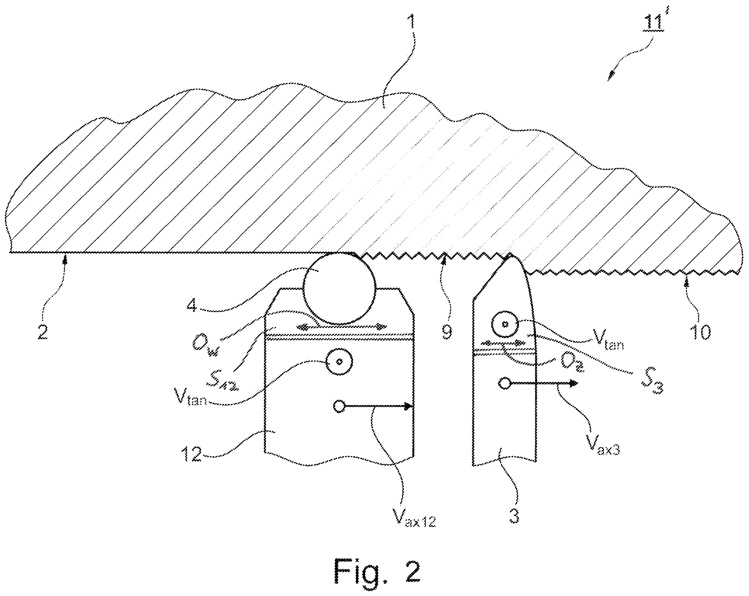

Figur 2 zeigt nun eine insgesamt mit dem Bezugszeichen 11' gekennzeichnete weitere Vorrichtung umfasst ein Zerspanungswerkzeug 3 in Form eines Drehwerkzeugs sowie ein Walzwerkzeug 12. Gleiche Bezugszeichen wie in Figur 1 kennzeichnen gleiche Elemente.

Ausgangspunkt des mit der weiteren Vorrichtung 11' durchführbaren Verfahrens ist ebenfalls eine bereits gehärtete Werkstückoberfläche 10. Durch das Hartdrehen mittels des Drehwerkzeugs entsteht hieraus eine Oberfläche 9, welche eine typische, durch das Drehen erzeugte Struktur aufweist. Der Vorgang des Drehens erfolgt mit einer translatorischen Geschwindigkeit Vₐₓ₃ und einer tangentialen Geschwindigkeit Vₜₐₙ. Die Richtung der translatorischen Geschwindigkeit Vₐₓ₃ entspricht der Ausrichtung der Rotationsachse des Werkstücks 1, das heißt dessen Axialrichtung.

Das Walzwerkzeug 12 ist in Längsrichtung der Rotationsachse des Werkstücks 1 versetzt zum Zerspanungswerkzeug 3 angeordnet und umfasst eine Kugel als Walzelement 4. Die Kugel wird in an sich bekannter Weise durch den Druck eines Hydraulikmediums beaufschlagt. Das Walzwerkzeug 12 einschließlich der Kugel wird bei der Bearbeitung des Werkstücks 1 relativ zu diesem mit einer translatorischen Geschwindigkeit Vₐₓ₁₂ vorgeschoben, welche auf diverse Weise, wie nachstehend noch näher erläutert wird, relativ zur translatorischen Geschwindigkeit Vₐₓ₃ variiert werden kann. Dagegen stimmt die mit Vₜₐₙ bezeichnete tangentiale Geschwindigkeit des Walzwerkzeugs 12 relativ zum Werkstück 1 mit der tangentialen Geschwindigkeit Vₜₐₙ des Zerspanungswerkzeugs 3 überein. Dies gilt in Fällen, in welchen die zu bearbeitende Oberfläche des Werkstücks 1, wie im Ausführungsbeispiel skizziert, zylindrisch ist. Im Fall einer kegeligen oder sphärisch gekrümmten Oberfläche des Werkstücks 1 weichen die tangentialen Geschwindigkeiten voneinander ab, ohne den Bearbeitungsvorgang grundsätzlich zu verändern. Durch das Walzwerkzeug 12 wird in jedem Fall die fertig behandelte Oberfläche 2 erzeugt.

Dabei sind das Zerspanungswerkzeug 3 einerseits und das Walzwerkzeug 12 andererseits jeweils umfassend einen Schlitten S₃, S₁₂ ausgebildet, der im Rahmen seiner Auslenkbarkeit eine oszillierende Umkehrung der Vorschubrichtung (hier von links nach rechts im Bild) des Zerspanungswerkzeugs 3 und des Walzwerkzeugs 12 ermöglicht. Dabei ist die weitere Vorrichtung 11', in der das Zerspanungswerkzeug 3 sowie das Walzwerkzeug 12 befestigt sind, mit zwei Oszillationseinheiten ausgerüstet, welche die beiden Schlitten S₃, S₁₂ jeweils zu einer Oszillationsbewegung Ow, Oz in horizontaler Richtung anregen.

So kann die Position des Zerspanungswerkzeugs 3 gegenüber dem Werkstück 1 - durch die Oszillation des Schlittens S₃ in horizontaler Richtung verursacht - so verändert werden, dass bereits mit dem Drehwerkzeug bearbeitete Bereiche erneut in Eingriff mit dem Drehwerkzeug kommen.

Weiterhin kann die Position des Walzwerkzeugs 12 gegenüber dem Werkstück 1 - durch die Oszillation des Schlittens S₁₂ in horizontaler Richtung verursacht - so verändert werden, dass bereits mit dem Walzwerkzeug 12 überfahrene Bereiche erneut in Eingriff mit dem Walzwerkzeug 12 kommen.

So kann hier der Abstand zwischen dem Zerspanungswerkzeug 3 und dem Walzwerkzeug 12 ebenfalls oszillierend verändert werden, um die Ausbildung der Kreuzungspunkte im Bereich der sich ausbildenden Bearbeitungsspuren bei Drehen und Walzen gezielt zu beeinflussen.

Selbstverständlich kann eine erfindungsgemäße Vorrichtung auch mit lediglich einem der Schlitten S₃, S₁₂ ausgeführt sein. Eine in den Figuren 1 und 2 nicht dargestellte Ausführungsform einer Vorrichtung gemäß einer Kombination der Ausführungsform nach Figur 1 und der Ausführungsform nach Figur 2 ist ebenfalls möglich.

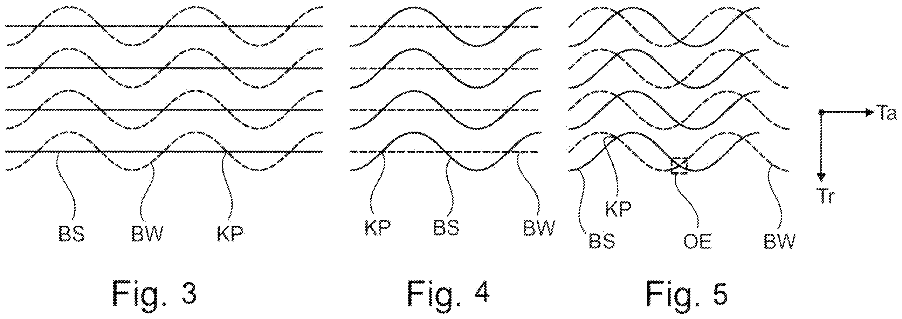

In den Figuren 3 bis 5 sind verschiedene Bearbeitungsspuren BW, BS, skizziert, welche durch das Walzwerkzeug 12 beziehungsweise durch das Zerspanungswerkzeug 3 auf der fertig bearbeiteten Werkstückoberfläche 2 unter Verwendung einer weiteren Vorrichtung 11' nach Figur 2 erzeugt werden. Die mit Ta bezeichnete tangentiale Richtung entspricht hierbei der Richtung, in welcher die tangentiale Geschwindigkeit Vₜₐₙ zu messen ist. Die hierzu orthogonale translatorische Richtung Tr entspricht der Längsrichtung der Rotationsachse des Werkstücks 1, das heißt der Richtung, in welcher die Geschwindigkeiten Vₐₓ₃, Vₐₓ₁₂ zu messen sind.

Im Fall von Fig. 3 wird das Zerspanungswerkzeug 3 während des Hartdrehens mit konstanter translatorischer Geschwindigkeit Vₐₓ₃ vorgeschoben. Im Unterschied hierzu vollzieht das Walzwerkzeug 12 in translatorischer Richtung Tr Oszillationen. Im vorliegenden Fall sind diese Oszillationen annähernd sinusförmig. In abgewandelter Verfahrensführung könnte es sich beispielsweise um zick-zack-förmige Bahnen handeln.

Als Ergebnis entstehen zahlreiche Kreuzungspunkte KP zwischen der Bearbeitungsspur BS des Zerspanungswerkzeugs 3 und der Bearbeitungsspur BW des Walzwerkzeugs 12. Je nach Bearbeitungsparametern können die Bearbeitungsspuren BS, BW auf der fertiggestellten Oberfläche 2 des Werkstücks 1 extrem schwach ausgeprägt oder nicht mehr mit üblichen Mitteln erkennbar sein. Durch die Ansteuerung der Vorrichtung 11' sind die Bearbeitungsspuren BS, BW jedoch in allen Fällen in definierter Weise vorgegeben. Dies gilt auch für die Bearbeitungsvarianten nach den Fig. 4 und 5.

Im Fall von Fig. 4 vollzieht das Zerspanungswerkzeug 3 in translatorischer Richtung Tr Oszillationen. Dagegen verfährt das Walzwerkzeug 12 in diesem Fall mit konstanter translatorischer Geschwindigkeit Vₐₓ₁₂ gegenüber dem Werkstück 1. Hierdurch entsteht eine insgesamt schraubenförmig gewundene Form der Bearbeitungsspur BW, wogegen bei der Bearbeitungsspur BS der Schraubenform eine Oszillation in axialer Richtung Tr, das heißt in Richtung der Drehachse des Werkstücks 1, überlagert ist.

In dem in Fig. 5 skizzierten Fall ist sowohl eine Oszillation des Zerspanungswerkzeugs 3 als auch eine Oszillation des Walzwerkzeugs 12, jeweils in translatorischer Richtung Tr, gegeben. Auch in diesem Fall entstehen zahlreiche Kreuzungspunkte KP zwischen den verschiedenen Bearbeitungsspuren BS, BW. Jeder Kreuzungspunt KP liegt innerhalb eines Oberflächenelementes OE, in welchem keine der Bearbeitungsspuren BS, BW genau in Tangentialrichtung Ta verläuft. Die Frequenz, mit welcher die translatorische Geschwindigkeit Vₐₓ₃ oszilliert, ist im Fall von Fig. 5 mit der Frequenz, mit der die translatorische Geschwindigkeit Vₐₓ₁₂ oszilliert, identisch. Abweichend hiervon sind auch andere Verhältnisse zwischen den genannten Frequenzen wählbar. In jedem Fall ist die Frequenz, mit welcher die translatorische Geschwindigkeit Vₐₓ₃, Vₐₓ₁₂ mindestens eines der Werkzeuge 3, 12 oszilliert, höher als die Frequenz, mit welcher das Werkstück 1 rotiert.

### Bezugszeichenliste

- 1: Werkstück, Lagerring
- 2: Werkstückoberfläche, fertig bearbeitet
- 3: Zerspanungswerkzeug
- 4: Kugel, Walzelement
- 9: Oberfläche, hartgedreht, jedoch noch nicht gewalzt
- 10: Werkstückoberfläche, gehärtet, ansonsten noch nicht weiter bearbeitet
- 11: Vorrichtung
- 11': Vorrichtung
- 12: Walzwerkzeug

- S₃: Schlitten am Zerspanungswerkzeug
- S₁₂: Schlitten am Walzwerkzeug
- BS: Bearbeitungsspur des Zerspanungswerkzeugs
- BW: Bearbeitungsspur des Walzwerkzeugs
- KP: Kreuzungspunkt
- OE: Oberflächenelement
- Oz: Oszillationsbewegung des Schlittens S₃
- Ow: Oszillationsbewegung des Schlittens S₁₂
- Tr: translatorische Richtung, Axialrichtung
- Ta: Tangentialrichtung
- V_{a×3}: translatorische Geschwindigkeit des Zerspanungswerkzeugs
- V_{a×12}: translatorische Geschwindigkeit des Walzwerkzeugs
- Vₜₐₙ: tangentiale Geschwindigkeit

## Patentansprüche

1. Verfahren zur Oberflächenbehandlung eines Werkstücks (1), wobei eine gehärtete Werkstückoberfläche (10) des Werkstücks (1) zunächst spanabhebend bearbeitet und anschließend gewalzt wird, wobei die die Zerspanung und das Walzen umfassende Bearbeitung bei rotierendem Werkstück (1) in ein und derselben Aufspannung erfolgt, **dadurch gekennzeichnet, dass** die spanabhebende Bearbeitung einerseits und das Walzen andererseits mit sich überschneidenden Bearbeitungsspuren (BS, BW) durchgeführt werden, indem während der Bearbeitung der in Axialrichtung (Tr) des Werkstücks (1) gemessene Abstand zwischen dem zur Zerspanung verwendeten Werkzeug (3) und dem zum Walzen verwendeten Werkzeug (12) oszillierend verändert wird, und dass ein Umfang des Werkstücks (1) ein ganzzahliges Vielfaches einer Wellenlänge einer Bearbeitungsspur (BS) des zur Zerspanung verwendeten Werkzeugs (3) beträgt.

2. Verfahren nach Anspruch 1, **dadurch gekennzeichnet, dass** bei der Bearbeitung der Vorschub des Zerspanungswerkzeugs (3) mit konstanter Geschwindigkeit erfolgt, wogegen das Walzwerkzeug (12) mit oszillierender Geschwindigkeit vorgeschoben wird.

3. Verfahren nach Anspruch 1, **dadurch gekennzeichnet, dass** bei der Bearbeitung der Vorschub des Walzwerkzeugs (12) mit konstanter Geschwindigkeit erfolgt, wogegen das Zerspanungswerkzeug (3) mit oszillierender Geschwindigkeit vorgeschoben wird.

4. Verfahren nach Anspruch 1, **dadurch gekennzeichnet, dass** bei der Bearbeitung der Vorschub des Walzwerkzeugs (12) mit oszillierender Geschwindigkeit erfolgt und der Vorschub des Zerspanungswerkzeugs (3) mit dazu unterschiedlicher oszillierender Geschwindigkeit erfolgt.

5. Verfahren nach Anspruch 1, **dadurch gekennzeichnet, dass** bei der Bearbeitung eine Vorschubrichtung des Walzwerkzeugs (12) oszillierend umgekehrt wird, während eine Vorschubrichtung des Zerspanungswerkzeugs (3) beibehalten wird oder dass bei der Bearbeitung eine Vorschubrichtung des Zerspanungswerkzeugs (3) oszillierend umgekehrt wird, während eine Vorschubrichtung des Walzwerkzeugs (12) beibehalten wird.

6. Verfahren nach Anspruch 1, **dadurch gekennzeichnet, dass** bei der Bearbeitung eine Vorschubrichtung des Zerspanungswerkzeugs (3) oszillierend umgekehrt wird und eine Vorschubrichtung des Walzwerkzeugs (12) oszillierend umgekehrt wird.

7. Verfahren nach einem der Ansprüche 2 bis 6, **dadurch gekennzeichnet, dass** die spanabhebende Bearbeitung durch Hartdrehen erfolgt.

8. Vorrichtung (11') zur Durchführung eines Verfahrens nach einem der Ansprüche 1 bis 7, umfassend ein Zerspanungswerkzeug (3) in Form eines Drehwerkzeuges und ein Walzwerkzeug (12), wobei das Zerspanungswerkzeug (3) und/oder das Walzwerkzeug (12) einen Schlitten (S₃, S₁₂) umfasst, der eine oszillierende Umkehrung der Vorschubrichtung des Zerspanungswerkzeugs (3) und/oder des Walzwerkzeugs (12) ermöglicht.

9. Vorrichtung (11') nach Anspruch 8, wobei das Walzwerkzeug (12) eine Kugel als Walzelement (4) aufweist.

## Claims

1. A method for surface treatment of a workpiece (1), wherein a hardened workpiece surface (10) of the workpiece (1) is first machined and then rolled, wherein the machining comprising the cutting and the rolling is carried out with the rotating workpiece (1) in one and the same clamping process, **characterized in that** the machining process, on the one hand, and the rolling process, on the other hand, are carried out with overlapping machining tracks (BS, BW), **in that**, during machining, the distance measured in the axial direction (Tr) of the workpiece (1) between the tool (3) used for machining and the tool (12) used for rolling is changed in an oscillating manner, and **in that** a circumference of the workpiece (1) is an integer multiple of a wavelength of a machining track (BS) of the tool (3) used for machining.

2. The method according to claim 1, **characterized in that,** during machining, the machining tool (3) is advanced at a constant speed, whereas the rolling tool (12) is advanced at an oscillating speed.

3. The method according to claim 1, **characterized in that,** during machining, the feed of the rolling tool (12) takes place at a constant speed, whereas the machining tool (3) is advanced at an oscillating speed.

4. The method according to claim 1, **characterized in that,** during machining, the feed of the rolling tool (12) takes place at an oscillating speed and the feed of the machining tool (3) takes place at a different oscillating speed.

5. The method according to claim 1, **characterized in that,** during machining, a feed direction of the rolling tool (12) is reversed in an oscillating manner while a feed direction of the machining tool (3) is maintained, or **in that**, during machining, a feed direction of the machining tool (3) is reversed in an oscillating manner while a feed direction of the rolling tool (12) is maintained.

6. The method according to claim 1, **characterized in that,** during machining, a feed direction of the machining tool (3) is reversed in an oscillating manner and a feed direction of the rolling tool (12) is reversed in an oscillating manner.

7. The method according to one of claims 2 to 6, **characterized in that** the machining is carried out by hard turning.

8. A device (11 ') for carrying out a method according to any one of claims 1 to 7, comprising a machining tool (3) and a rolling tool (12), **characterized in that** the machining tool (3) and/or the rolling tool (12) comprise a carriage (S₃, S₁₂), which allows for an oscillating reversal of the feed direction of the machining tool (3) and/or of the rolling tool (12).

9. The device (11') according to claim 8, wherein the rolling tool (12) has a ball as a rolling element (4).

## Revendications

1. Procédé de traitement de surface d'une pièce (1), dans lequel une surface de pièce durcie (10) de la pièce (1) est d'abord usinée par enlèvement de copeaux puis laminée, l'usinage comprenant l'enlèvement de copeaux et le laminage étant effectué dans un seul et même serrage tandis que la pièce (1) est en rotation, **caractérisé en ce que** l'usinage par enlèvement de copeaux d'une part et le laminage d'autre part sont réalisés avec des pistes d'usinage (BS, BW) qui se recoupent en modifiant de manière oscillante, pendant l'usinage, la distance mesurée dans la direction axiale (Tr) de la pièce (1) entre l'outil (3) utilisé pour l'enlèvement de copeaux et l'outil (12) utilisé pour le laminage, et **en ce qu'**une circonférence de la pièce (1) est un multiple entier d'une longueur d'onde d'une piste d'usinage (BS) de l'outil (3) utilisé pour l'enlèvement de copeaux.

2. Procédé selon la revendication 1, **caractérisé en ce que,** pendant l'usinage, l'outil d'enlèvement de copeaux (3) avance à une vitesse constante, tandis que l'outil de laminage (12) avance à une vitesse oscillante.

3. Procédé selon la revendication 1, **caractérisé en ce que,** pendant l'usinage, l'outil de laminage (12) avance à une vitesse constante, tandis que l'outil d'enlèvement de copeaux (3) avance à une vitesse oscillante.

4. Procédé selon la revendication 1, **caractérisé en ce que,** pendant l'usinage, l'outil de laminage (12) avance à une vitesse oscillante et l'outil d'enlèvement de copeaux (3) avance à une vitesse oscillante différente.

5. Procédé selon la revendication 1, **caractérisé en ce que,** pendant l'usinage, une direction d'avance de l'outil de laminage (12) est inversée de manière oscillante, tandis qu'une direction d'avance de l'outil d'enlèvement de copeaux (3) est maintenue ou **en ce que**, pendant l'usinage, une direction d'avance de l'outil d'enlèvement de copeaux (3) est inversée de manière oscillante, tandis qu'une direction d'avance de l'outil de laminage (12) est maintenue.

6. Procédé selon la revendication 1, **caractérisé en ce que,** pendant l'usinage, une direction d'avance de l'outil d'enlèvement de copeaux (3) est inversée de manière oscillante et une direction d'avance de l'outil de laminage (12) est inversée de manière oscillante.

7. Procédé selon l'une des revendications 2 à 6, **caractérisé en ce que** l'usinage par enlèvement de copeaux est réalisé par tournage dur.

8. Dispositif (11') pour la réalisation d'un procédé selon l'une des revendications 1 à 7, comprenant un outil d'enlèvement de copeaux (3) sous forme d'un outil de tournage et un outil de laminage (12), l'outil d'enlèvement de copeaux (3) et/ou l'outil de laminage (12) comportant un coulisseau (S₃, p₁₂), qui permet une inversion oscillante du sens d'avance de l'outil d'enlèvement de copeaux (3) et/ou de l'outil de laminage (12).

9. Dispositif (11') selon la revendication 8, dans lequel l'outil de laminage (12) comporte une bille comme élément roulant (4).
